# EUROPÄISCHE PATENTANMELDUNG

(11) **EP 2 363 837 A1**
(43) Veröffentlichungstag der Anmeldung: **07.09.2011**
(21) Anmeldenummer: 11156414.2
(22) Anmeldetag: 01.03.2011
(51) Int. Cl.: G07F 7/06, G07G 1/00, B07C 5/12, G06K 7/10

(54) **Vorrichtung zur optischen Erkennung von Merkmalen auf Verpackungen sowie entsprechendes Verfahren**

(30) Priorität: 01.03.2010 DE 102010002487
(71) Anmelder: SIELAFF GMBH & CO. KG AUTOMATENBAU, 91567 Herrieden (DE)
(72) Erfinder: Muck, Oliver, 98693, Ilmenau (DE); Kasperek, Jürgen, 91555, Feuchtwangen (DE)
(74) Vertreter: Hassa, Oliver Michael

(57) **Zusammenfassung**

Die Erfindung betrifft eine Vorrichtung zur optischen Erkennung von Merkmalen auf Verpackungen, insbesondere Bar- oder Strichcodes oder dergleichen, umfassend
mehrere Lichtquellen zur Bestrahlung einer Verpackung mit Licht,
mehrere Aufnahmeeinrichtungen zur Aufnahme des von der Verpackung reflektieren Lichts,
einen Erkennungsbereich zur optischen Erkennung von Merkmalen der Verpackung
eine Zuführeinrichtung zum Transportieren der Verpackung in den Erkennungsbereich,
eine Abführeinrichtung zum Entfernen der Verpackung aus dem Erkennungsbereich,
wobei die Lichtquellen und die Aufnahmeeinrichtungen im Bereich des Erkennungsbereichs angeordnet sind, und wobei die Aufnahmeeinrichtungen im Wesentlichen in zumindest zwei Ebenen angeordnet sind, welche zueinander parallel und beabstandet angeordnet sind und wobei die beiden Ebenen senkrecht zu einer Transportrichtung der Verpackung angeordnet sind sowie ein entsprechendes Verfahren.

## Beschreibung

### Stand der Technik

Die Erfindung betrifft eine Vorrichtung zur optischen Erkennung von Merkmalen auf Verpackungen, insbesondere Bar- oder Strichcodes oder dergleichen sowie ein entsprechendes Verfahren.

Unter Merkmalen im Sinne der vorliegenden Erfindung sind insbesondere eindimensionale Strich- oder Barcodes, zweidimensionale Matrixcodes oder auch Sicherheitsmerkmale, wie beispielsweise dreidimensionale Hologramme oder dergleichen zu verstehen.

Vorrichtungen zur optischen Erkennung von Merkmalen auf Verpackungen finden zum Beispiel Anwendung in Rücknahmeautomaten, insbesondere für mit Pfand belegtes Leergut, wie Glas- oder Plastikflaschen oder auch Dosen. Dabei ist eine zuverlässige Erkennung und Identifizierung der einzelnen Flaschen oder Dosen erforderlich, um eine ordnungsgemäße Auszahlung des Pfandes für die Flasche oder Dose zu ermöglichen.

Aus der WO 2009/021515 ist eine Vorrichtung zur optischen Erkennung von Merkmalen auf Getränkeverpackungen bekannt geworden. Eine Getränkeverpackung wird mittels einer Transportvorrichtung in das Innere der Vorrichtung zu deren optischer Erkennung eingebracht. In einer Ebene senkrecht zu der Transportrichtung der Getränkeverpackung sind über den Umfang eines Ringes verteilt Sensoren und Lichtquellen angeordnet, die zur Erkennung von Merkmalen auf der Getränkeverpackung dienen. Insbesondere das Innere des Ringes dient als Erkennungsbereich zur Erkennung von Merkmalen auf den Getränkeverpackungen. Mittels der Transporteinrichtung wird die Getränkeverpackung in den Erkennungsbereich transportiert. Im Erkennungsbereich wird mittels der Lichtquellen die Getränkeverpackung mit Licht bestrahlt. Die Sensoren detektieren das von der Getränkeverpackung und deren Merkmalen reflektierte Licht. Das detektierte Licht wird mittels einer Analysevorrichtung analysiert und die Getränkeverpackung anschließend mittels der Transportvorrichtung zur weiteren Verarbeitung aus dem Erkennungsbereich entfernt.

Da die Sensoren und die Lichtquellen in der Ebene des Ringes angeordnet sind, detektieren die Sensoren reflektiertes Licht von den Merkmalen der Getränkeverpackung, welches in der Ebene des Ringes verläuft. Weiterhin erschwert die Anordnung von Sensoren und Lichtquellen auf dem Ring die Wartung, da eine entsprechend aufwendige Kabelverlegung hierfür erforderlich ist.

### Aufgabe der Erfindung

Aufgabe der vorliegenden Erfindung ist es daher, eine Vorrichtung und ein Verfahren zur Erkennung von Merkmalen auf Verpackungen zur Verfügung zu stellen, welche zuverlässiger und genauer Merkmale auf Verpackungen optisch erkennen kann und gleichzeitig eine Wartung der Vorrichtung erleichtert.

### Vorteile der Erfindung

Die Erfindung löst die Aufgabe mit einer Vorrichtung zur optischen Erkennung von Merkmalen auf Verpackungen, insbesondere Bar- oder Strichcodes oder dergleichen, umfassend mehrere Lichtquellen zur Bestrahlung einer Verpackung mit Licht, mehrere Aufnahmeeinrichtungen zur Aufnahme des von der Verpackung reflektierten Lichts, einen Erkennungsbereich zur optischen Erkennung von Merkmalen der Verpackung, eine Zuführeinrichtung zum Transportieren der Verpackung in den Erkennungsbereich, eine Abführeinrichtung zum Entfernen der Verpackung aus dem Erkennungsbereich, wobei die Lichtquellen und die Aufnahmeeinrichtungen im Bereich des Erkennungsbereichs angeordnet sind, und wobei die Aufnahmeeinrichtungen im Wesentlichen in zumindest zwei Ebenen angeordnet sind, welche zueinander parallel und beabstandet angeordnet sind und wobei die beiden Ebenen senkrecht zu einer Transportrichtung der Verpackung angeordnet sind.

Die Erfindung löst ebenfalls die Aufgabe mit einem Verfahren zur optischen Erkennung von Merkmalen auf Verpackungen, insbesondere Bar- oder Strichcodes oder dergleichen, und insbesondere zum Ablauf auf einer Vorrichtung gemäß zumindest einem der Ansprüche 1-10, umfassend die Schritte Transportieren einer Verpackung in einen Erkennungsbereich zur optischen Erkennung von Merkmalen der Verpackung, Bestrahlen der Verpackung mit Licht durch mehrere Lichtquellen, Aufnahme eines von der Verpackung reflektierten Lichts mittels zumindest einer Aufnahmeeinrichtung, Abtransportieren der Verpackung aus dem Erkennungsbereich, wobei die Lichtquellen derart zusammenwirken, dass die Lichtquellen im Wesentlichen gleichzeitig die Verpackung mit Licht bestrahlen.

Der Vorteil hierbei ist, dass durch die Anordnung der Aufnahmeeinrichtungen in den beiden Ebenen zuverlässiger und genauer das von Merkmalen einer Verpackung reflektierte Licht aufgenommen und damit analysiert werden kann. Erkennungszeiten für Merkmale auf Verpackungen werden damit erheblich verkürzt. Gleichzeitig ist durch die getrennte Anordnung der Aufnahmeeinrichtungen in verschiedenen Ebenen auch eine verbesserte Zugänglichkeit im Wartungsfall gewährleistet, was die Zeit für einen Austausch Aufnahmeeinrichtungen senkt und der Austausch damit kostengünstig vorgenommen werden kann. Schließlich kann durch die Anordnung der Aufnahmeeinrichtungen in verschiedenen Ebenen und insbesondere durch geeignete Anordnung der Lichtquellen auch direktes Gegenlicht bei der im Wesentlichen gleichzeitigen Beaufschlagung der Verpackung mit Licht vermieden werden, was eine zuverlässigere Erkennung der Merkmale der Verpackung ermöglicht.

Gemäß einer weiteren bevorzugten Weiterbildung der Erfindung sind die Lichtquellen in zumindest zwei Ebenen angeordnet, welche zueinander parallel und beabstandet angeordnet sind und wobei insbesondere die beiden Ebenen senkrecht zu einer Transportrichtung der Verpackung angeordnet sind. Der Vorteil hierbei ist, dass damit auf einfache Weise die Lichtquellen auf Merkmale von Verpackungen korrespondierend zu entsprechenden Positionen der Aufnahmeeinrichtungen einstrahlen können, was eine weitere verbesserte Erkennung des von Merkmalen der Verpackung reflektierten Lichts ermöglicht. Gleichzeitig ist durch die Anordnung der Lichtquellen in verschiedenen Ebenen ebenfalls eine verbesserte Zugänglichkeit der Lichtquellen im Wartungsfall möglich.

Gemäß einer weiteren bevorzugten Weiterbildung sind die Aufnahmeeinrichtungen und/oder die Lichtquellen in den jeweiligen Ebenen im Wesentlichen kreisförmig angeordnet. Der Vorteil hierbei ist, dass damit eine symmetrische Anordnung der Aufnahmeeinrichtungen und/oder der Lichtquellen erreicht wird, was besonders bei kreisförmigen Verpackungen wie Flaschen oder dergleichen eine zuverlässige und schnelle Erkennung ermöglicht.

Gemäß einer weiteren bevorzugten Weiterbildung ist zumindest eine der Lichtquellen in einem unteren Bereich des Erkennungsbereichs senkrecht beabstandet von ihrer jeweiligen Ebene. Der Vorteil hierbei ist, dass dadurch eine Verschmutzung der Lichtquellen an einer Verpackung anhaftenden Schmutzes, oder im falle von Getränkeverpackungen in diesen zurückgebliebener Restflüssigkeit verhindert wird. Der Schmutz und die Restflüssigkeit fallen bzw. fließen im Wesentlichen senkrecht nach unten, sodaß die Lichtquellen bei entsprechender seitlicher Versetzung aus ihrer jeweiligen Ebene heraus, nicht mit dem Schmutz bzw. der Restflüssigkeit beaufschlagt werden können.

Gemäß einer weiteren bevorzugten Weiterbildung der Erfindung sind die Lichtquellen außerhalb des Bereichs zwischen den beiden Ebenen der Aufnahmeeinrichtungen angeordnet. Der Vorteil hierbei ist, dass damit die Verpackung seitlich mit dem Licht beaufschlagt werden kann, was reflektiertes Licht von den Merkmalen der Verpackung erhöht und damit die Erkennung des reflektierten Lichts mittels der Aufnahmeeinrichtungen weiter verbessert.

Gemäß einer weiteren bevorzugten Weiterbildung der Erfindung sind die Aufnahmeeinrichtungen und/oder die Lichtquellen im Wesentlichen abwechselnd auf der ersten und zweiten Ebene angeordnet, wobei insbesondere zwei aufeinanderfolgende Aufnahmeeinrichtungen und/oder Lichtquellen in einer Ebene jeweils den gleichen Abstand zueinander aufweisen. Der Vorteil hierbei ist, dass damit ein Optimum aus Anzahl der Aufnahmeeinrichtungen und/oder Lichtquellen und Zuverlässigkeit der Aufnahme von Merkmalen reflektierten Lichts ermöglicht wird.

Gemäß einer weiteren bevorzugten Weiterbildung der Erfindung weisen die zwei Kreise, auf denen die Aufnahmeeinrichtungen und/oder die Lichtquellen angeordnet sind, im Wesentlichen gleichen Radius auf. Der Vorteil hierbei ist, dass damit die Zeit für die Konstruktion der Vorrichtung und damit die Herstellungskosten gesenkt werden, da auf unterschiedliche Positionen der Aufnahmeeinrichtungen verzichtet wird.

Gemäß einer weiteren bevorzugten Weiterbildung der Erfindung sind die Mittelpunkte der zwei Kreise auf einer gemeinsamen Achse angeordnet, wobei insbesondere die gemeinsame Achse und Transportrichtung parallel zueinander sind. Der Vorteil hierbei ist, dass eine noch einfachere und zuverlässige Montage der Aufnahmeeinrichtungen und/oder der Lichtquellen ermöglicht wird. Gleichzeitig wird damit auch die Zuverlässigkeit der Erkennung von Merkmalen gesteigert, da die Verpackung dann direkt durch die beiden Kreise bewegt werden kann. Gleichzeitig ist eine komplizierte und aufwendige Änderung der Transportrichtung für die Verpackung nicht notwendig.

Gemäß einer weiteren bevorzugten Weiterbildung der Erfindung ist eine Analysevorrichtung zur Analyse des aufgenommenen Lichts angeordnet. Der Vorteil hierbei ist, dass auf externe Analysevorrichtungen verzichtet werden kann, d.h. es kann eine integrierte Vorrichtung zur Verfügung gestellt werden, die kostengünstiger ist, da externe Anschlüsse für eine Analysevorrichtung entfallen können.

Gemäß einer weiteren bevorzugten Weiterbildung sind die Aufnahmeeinrichtungen und/oder die Lichtquellen zumindest teilweise spiralförmig und/oder helixförmig entlang einer Richtung, insbesondere entlang der Transportrichtung auf den jeweiligen zumindest zwei Ebenen angeordnet. Bei der helixförmigen Anordnung sind also die Lichtquellen derart angeordnet, dass diese einen gleichen Abstand von einer gemeinsamen Achse aufweisen, also auf einem Mantel eines fiktiven Zylinders mit der gemeinsamen Achse. Die gemeinsame Achse bildet dabei insbesondere die Transportrichtung der Verpackung. Die Lichtquellen sind dabei zumindest teilweise auf dem Mantel des fiktiven Zylinders entlang einer fiktiven Kurve mit konstanter Steigung angeordnet, die sich um den Mantel des fiktiven Zylinders windet. Der Erkennungsbereich ist dabei zumindest teilweise innerhalb des fiktiven Zylinders angeordnet. Gleiches gilt entsprechend auch für die helixförmige Anordnung der Aufnahmeeinrichtungen. Eine Helix der Lichtquellen weist dabei gleichen oder entgegengesetzten Orientierungssinn zu einer Helix der Aufnahmeeinrichtungen auf.

Sind die Lichtquellen und/oder die Aufnahmeeinrichtungen spiralförmig angeordnet, so sind die Lichtquellen und/oder die Aufnahmeeinrichtungen zumindest teilweise auf einer fiktiven Kurve angeordnet, die um die gemeinsame Achse verläuft und sich je nach Richtung entlang der gemeinsamen Achse von der gemeinsamen Achse entfernt oder annähert. Die gemeinsame Achse bildet dabei insbesondere die Transportrichtung der Verpackung V. Der Erkennungsbereich ist dabei zumindest teilweise innerhalb einer derartigen spiralförmigen Anordnung angeordnet.

Sowohl die Lichtquellen als auch die Aufnahmeeinrichtungen können dabei jeweils auf einer oder mehrerer Spiralen oder Helices angeordnet sein, wobei die Spiralen oder Helices der Lichtquellen und/oder der Aufnahmeeinrichtungen gleichen oder entgegengesetzten Orientierungssinn zu einer anderen Spirale oder Helix der Lichtquellen und/oder der Aufnahmeeinrichtungen aufweisen. Dabei ist im Wesentlichen eine Lichtquelle und/oder Aufnahmeeinrichtung in einer jeweiligen Ebene angeordnet.

Der Vorteil hierbei ist, dass damit Licht von unterschiedlichen Lichtquellen unter unterschiedlichem Winkel auf die gesamte Verpackung im Wesentlichen gleichmäßig eingestrahlt und auch aufgenommen werden kann. Die Zuverlässigkeit der optischen Erkennung der Merkmale wird damit noch weiter erhöht.

Gemäß einer weiteren bevorzugten Weiterbildung des Verfahrens der Erfindung wird das aufgenommene Licht mittels einer Analysevorrichtung analysiert. Der Vorteil hierbei ist, dass mittels der Analysevorrichtung die Merkmale zuverlässig und einfach erkannt und ausgewertet werden können, sodass nachfolgende Verarbeitungsschritte schnell und zuverlässig durchgeführt werden können, beispielsweise ein Sortieren von Getränkeverpackungen anhand verschiedener Merkmale auf unterschiedlichen Getränkeverpackungen.

Gemäß einer weiteren bevorzugten Weiterbildung des Verfahrens der Erfindung wirken die Aufnahmeeinrichtungen derart zusammen, sodass diese im Wesentlichen gleichzeitig das von der Verpackung reflektierte Licht aufnehmen. Der Vorteil hierbei ist, dass die Zuverlässigkeit der Erkennung von Merkmalen auf Verpackungen weiter gesteigert wird.

### Zeichnungen

Weitere Merkmale und Vorteile der Erfindung ergeben sich aus der nachfolgenden Beschreibung von Ausführungsbeispielen anhand der Zeichnung. Dabei zeigt:
- Fig. 1: eine Vorrichtung gemäß einer ersten Ausführungsform der Erfindung im Querschnitt senkrecht zu einer Transportrichtung einer Getränkeverpackung und
- Fig. 2: eine Vorrichtung gemäß Fig. 1 im Querschnitt parallel zur Transportrichtung.
- Fig. 3: eine Vorrichtung gemäß Fig. 1 mit spiralförmig angeordneten Aufnahmevorrichtungen in Form von Kameras.

### Ausführungsbeispiele

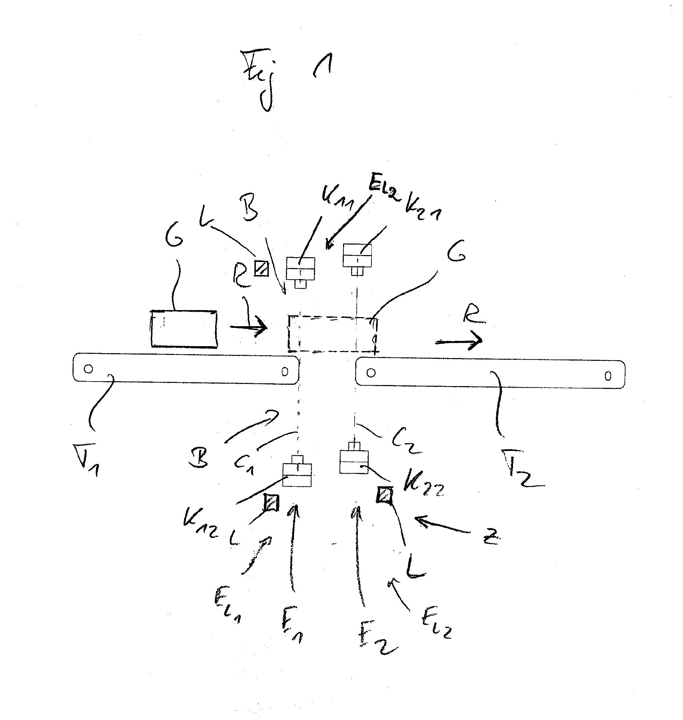

In Fig.1 bezeichnet Bezugszeichen 1 eine Vorrichtung gemäß einer ersten Ausführungsform der Erfindung. Weiter sind in Fig. 1 ein Transportband T₁ zum Zuführen einer Getränkeverpackung G gezeigt. Das Transportband T₁ transportiert dabei die Getränkeverpackung G in ihrer Längsrichtung in einen Erkennungsbereich B zur Erkennung von Merkmalen auf der Getränkeverpackung G. Ein zweites Transportband T₂ transportiert die Getränkeverpackung G nach deren Erkennung aus dem Erkennungsbereich B heraus, um eine Erkennung einer weiteren Getränkeverpackung G zu ermöglichen.

Um eine Erkennung von Merkmalen der Getränkeverpackungen G zu ermöglichen, sind zum einen mehrere Lichtquellen L angeordnet. Die Lichtquellen L sind im Wesentlichen ringförmig im Bereich des Erkennungsbereichs B angeordnet, um diesen mit Licht beaufschlagen zu können, sodass eine Getränkeverpackung G , die sich im Erkennungsbereich B befindet, im Wesentlichen rundum mit Licht beaufschlagt werden kann. Die Lichtquellen L sind gemäß Figur 1 in zwei Ebenen E_{L1} und E_{L2} angeordnet. Die Ebenen E_{L1}, E_{L2} sind zueinander parallel und voneinander beabstandet angeordnet. Die Lichtquellen L müssen dabei nicht in zwei Ebenen E_{L1}, E_{L2} angeordnet sein, sondern können auch beliebig verteilt und insbesondere auch an bestimmte Anforderungen angepasst werden, beispielsweise an verschiedene Formen von Getränkeverpackungen G, um in optimaler Weise Merkmale der Getränkeverpackungen G mit Licht beaufschlagen zu können. Des Weiteren können die Lichtquellen L, die unterhalb der Transportbänder T₁, T₂ angeordnet sind, auch seitlich versetzt, d.h. parallel zur Transportrichtung R aus der Ebene E_{L1}, E_{L2} heraus und beabstandet von dieser angeordnet sein. Dies dient dazu, dass Schmutz oder Restflüssigkeit, die sich an oder in den Verpackungen befinden, nicht die Lichtquellen L verschmutzt. Hierzu kann ebenfalls ein entsprechender Auffangbehälter in diesem Bereich angeordnet sein, der Schmutz oder Restflüssigkeit auffängt, sodass eine leichtere Reinigung der Vorrichtung 1 ermöglicht wird.

Um das von Merkmalen der Getränkeverpackung G reflektierte Licht aufzunehmen, sind zum anderen Kameras K₁₁, K₁₂ in einer ersten Ebene E₁ und Kameras K₂₁, K₂₂ in einer zweiten Ebene E₂ angeordnet. Selbstverständlich sind auch mehr als jeweils zwei Kameras K₁₁, K₁₂, K₂₁, K₂₂ in den beiden Ebenen E₁, E₂ möglich. Des Weiteren können auch weitere Kameras in weiteren Ebenen angeordnet sein. Die Ebenen E₁, E₂ sind dabei parallel zueinander und voneinander beabstandet angeordnet. Die Ebenen E₁, E₂ befinden sich dabei im Wesentlichen senkrecht zur Transportrichtung R der Getränkeverpackung G, die insbesondere parallel zu einer Längsachse der Getränkeverpackung G ist.

In Figur 1 sind die Ebenen E_{L1}, E₁, E₂, und E_{L2} nacheinander in Transportrichtung R im Bereich des Erkennungsbereichs B angeordnet.

Die Kameras K₁₁, K₁₂, K₂₁, K₂₂ sind weiter mit einer Analysevorrichtung (nicht gezeigt) verbunden zur Auswertung des von den Kameras K₁₁, K₁₂, K₂₁, K₂₂ aufgenommenen Lichts. Die Analysevorrichtung analysiert das von der Getränkeverpackung G reflektierten Lichts und identifiziert die an der Getränkeverpackung G angeordneten Merkmale, sodass eine Art der Getränkeverpackung G eindeutig identifiziert wird. Dies erleichtert die spätere Weiterverarbeitung der erkannten Getränkeverpackung G, beispielsweise, wenn unterschiedliche Arten von Getränkeverpackungen G in unterschiedliche Behälter sortiert werden sollen.

Um Merkmale auf einer Getränkeverpackung G zu erkennen, wird diese mittels des Transportsbandes T₁ in den Erkennungsbereich B transportiert. Anschließend wird die Getränkeverpackung G gleichzeitig mit Licht von den Lichtquellen L beaufschlagt. Die Kameras K₁₁, K₁₂, K₂₁, K₂₂ nehmen das von den Merkmalen der Getränkeverpackung G reflektierte Licht auf. Ist die Getränkeverpackung G und deren Merkmale zumindest teilweise identifiziert, wird die Getränkeverpackung G mittels des Transportbandes T₂ zur weiteren Verarbeitung aus dem Erkennungsbereich B abtransportiert, sodass mittels des Transportbandes T₁ eine neue Getränkeverpackung G in den Erkennungsbereich B transportiert werden kann. Sind die Merkmale der Getränkeverpackung G nicht oder unvollständig erkannt worden, kann die Getränkeverpackung G erneut mit Licht zur Erkennung der Merkmale der Getränkeverpackung G beaufschlagt werden. Wird nach einer vorab festgelegten Anzahl von Versuchen, die Merkmale der Getränkeverpackung G zu erkennen, diese nicht erkannt, kann diese entweder ohne Erkennung mittels des Transportbandes T₂ zur weiteren Verarbeitung von Getränkeverpackungen G mit nicht erkannten Merkmalen abtransportiert werden oder mittels des Transportbandes T₁ auch wieder entgegen der Transportrichtung R ausgegeben werden.

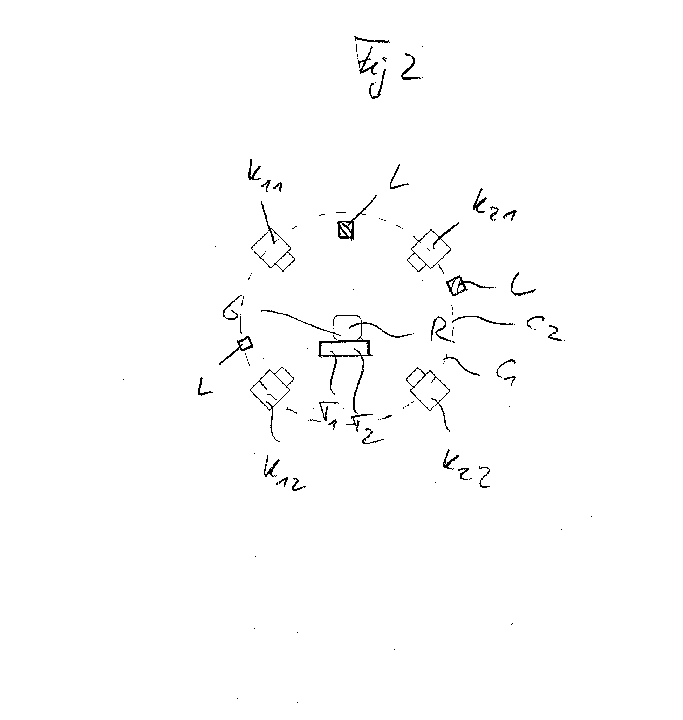

Figur 1 zeigt in Verbindung mit Figur 2 eine Anordnung von Kameras K₁₁, K₁₂, K₂₁, K₂₂. Die Kameras K₁₁, K₁₂, K₂₁, K₂₂ sind dabei in ihrer jeweiligen Ebene E₁, E₂ auf einem Kreis C₁, C₂ angeordnet. Beide Kreise C₁, C₂ weisen im Wesentlichen denselben Radius auf. In Figur 1 weist die Kamera K₁₁ einen scheinbar geringeren Abstand vom Mittelpunkt des Kreises in der Ebene E₁ auf, als die Kamera K₁₂ in der Ebene E₂. Dies ist dadurch bedingt, dass die Kameras K₁₁, K₁₂ der ersten Ebene E₁ und die Kameras K₂₁, K₂₂ der zweiten Ebene E₂ jeweils versetzt zueinander angeordnet sind. Bewegt man sich auf einem fiktiven Kreis der in einer zu den beiden Ebenen E₁, E₂ parallelen dritten Ebene angeordnet ist, wird abwechselnd zunächst die Kamera K₁₁ auf der ersten Ebene E₁, im weiteren Verlauf die Kamera K₂₁ der zweiten Ebene E₂, dann wiederum die Kamera K₁₂ der ersten Ebene E₁ und schließlich die Kamera K₂₂ der zweiten Ebene E₂ erreicht. Da die Kreise C₁, C₂ der Kameras K₁₁, K₁₂, K₂₁, K₂₂ der ersten und zweiten Ebene E₁, E₂ gemäß Figur 2 gleichen Radius aufweisen und diese bei Blickrichtung in Transportrichtung R jeweils äquidistant auf dem Umfang der überlagerten Kreise C₁, C₂ der Ebenen E₁, E₂ verteilt sind, ergibt sich so eine im Wesentlichen zickzackförmige Anordnung der Kameras K₁₁, K₁₂, K₂₁, K₂₂ entlang eines Umfangs des Erkennungsbereichs B.

Selbstverständlich ist es im Rahmen der Erfindung möglich, weitere Kameras auf insbesondere weiteren Ebenen vorzusehen.

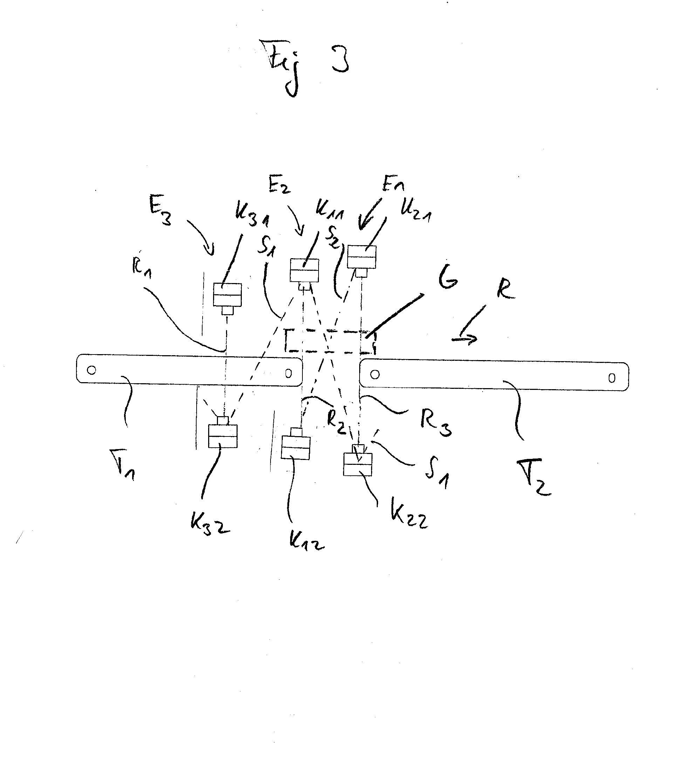

In Fig. 3 ist im Wesentlichen die Vorrichtung gemäß Figur 1 gezeigt. Im Unterschied zu Fig. 1 sind die Kameras K₁₁, K₁₂, K₂₁, K₂₂, K₃₁, K₃₂ gemäß Fig. 3 spiralförmig angeordnet. Die Kameras K₂₂, K₁₁, K₃₂ sind auf einer ersten Spirale S₁ und die Kameras K₂₁, K₁₂, K₃₁ auf einer zweiten Spirale S₂ angeordnet. Weiter sind die Kameras K₁₁, K₁₂, K₂₁, K₂₂, K₃₁, K₃₂ ebenfalls auf drei zueinander parallelen und voneinander beabstandeten Ebenen E₁, E₂, E₃ angeordnet. Die jeweiligen Abstände R₁, R₂, R₃ der Kameras K₁₁, K₁₂, K₂₁, K₂₂, K₃₁, K₃₂ in den jeweiligen Ebenen E₁, E₂, E₃ nehmen entgegen der Transportrichtung R voneinander ab und damit auch jeweilige Radien der Spiralen S₁, S₂.

## Patentansprüche

1. Vorrichtung (1) zur optischen Erkennung von Merkmalen auf Verpackungen (G), insbesondere Bar- oder Strichcodes oder dergleichen, umfassend
mehrere Lichtquellen (L) zur Bestrahlung einer Verpackung (G) mit Licht,
mehrere Aufnahmeeinrichtungen (K₁₁, K₁₂, K₂₁, K₂₂) zur Aufnahme des von der Verpackung (G) reflektieren Lichts,
einen Erkennungsbereich (B) zur optischen Erkennung von Merkmalen der Verpackung (G),
eine Zuführeinrichtung (T₁) zum Transportieren der Verpackung (G) in den Erkennungsbereich (B),
eine Abführeinrichtung (T₂) zum Entfernen der Verpackung (V) aus dem Erkennungsbereich (B),
wobei die Lichtquellen (L) und die Aufnahmeeinrichtungen (K₁₁, K₁₂, K₂₁, K₂₂) im Bereich des Erkennungsbereichs (B) angeordnet sind, und
wobei die Aufnahmeeinrichtungen (K₁₁, K₁₂, K₂₁, K₂₂) im Wesentlichen in zumindest zwei Ebenen (E₁, E₂) angeordnet sind, welche zueinander parallel und beabstandet angeordnet sind und wobei die beiden Ebenen (E₁, E₂) senkrecht zu einer Transportrichtung (R) der Verpackung (G) angeordnet sind.

2. Vorrichtung (1) nach Anspruch 1, wobei
die Lichtquellen (L) in zumindest zwei Ebenen (E_{L1}, E_{L2}) angeordnet sind, welche zueinander parallel und beabstandet angeordnet sind und wobei insbesondere die beiden Ebenen (E_{L1}, E_{L2}) senkrecht zu einer Transportrichtung (R) der Verpackung (G) angeordnet sind.

3. Vorrichtung (1) nach zumindest Anspruch 1, wobei die Aufnahmeeinrichtungen (K₁₁, K₁₂, K₂₁, K₂₂) und/oder die Lichtquellen (L) in den jeweiligen Ebenen (E₁, E₂) im Wesentlichen kreisförmig angeordnet sind.

4. Vorrichtung (1) nach zumindest Anspruch 3, wobei zumindest eine der Lichtquellen (L) in einem Bereich (Z) unterhalb des Erkennungsbereichs (B) senkrecht zu ihrer Ebene (E_{L1}, E_{L2}) angeordnet ist.

5. Vorrichtung nach zumindest Anspruch 1, wobei die Lichtquellen (L) außerhalb des Bereichs zwischen den beiden Ebenen (E₁, E₂) der Aufnahmeeinrichtungen (K₁₁, K₁₂, K₂₁, K₂₂) angeordnet sind.

6. Vorrichtung nach zumindest Anspruch 1, wobei die Aufnahmeeinrichtungen (K₁₁, K₁₂, K₂₁, K₂₂) und/oder die Lichtquellen (L) im Wesentlichen abwechselnd auf der ersten und zweiten Ebene (E₁, E₂) angeordnet sind, wobei insbesondere zwei aufeinanderfolgende Aufnahmeeinrichtungen (K₁₁, K₁₂, K₂₁, K₂₂) in einer Ebene (E₁, E₂) jeweils den gleichen Abstand zueinander aufweisen.

7. Vorrichtung nach zumindest Anspruch 3, wobei die Kreise (C₁, C₂), auf denen die Aufnahmeeinrichtungen (K₁₁, K₁₂, K₂₁, K₂₂) und/oder die Lichtquellen (L) angeordnet sind, im Wesentlichen gleichen Radius aufweisen.

8. Vorrichtung nach zumindest Anspruch 3, wobei die Mittelpunkte der zwei Kreise (C₁, C₂) auf einer gemeinsamen Achse angeordnet sind, wobei insbesondere die gemeinsame Achse und Transportrichtung (R) parallel zueinander sind.

9. Vorrichtung nach zumindest einem der Ansprüche 1-8, wobei eine Analysevorrichtung zur Analyse des aufgenommenen Lichts angeordnet ist.

10. Vorrichtung nach einem der Ansprüche 1 oder 2, wobei die Aufnahmeeinrichtungen (K₁₁, K₁₂, K₂₁, K₂₂) und/oder die Lichtquellen (L) zumindest teilweise spiralförmig und/oder helixförmig entlang einer Richtung, insbesondere entlang der Transportrichtung (R), auf den jeweiligen zumindest zwei Ebenen (E₁, E₂) angeordnet sind.

11. Verfahren zur optischen Erkennung von Merkmalen auf Verpackungen (G), insbesondere Bar- oder Strichcodes oder dergleichen, und insbesondere zum Ablauf auf einer Vorrichtung (1) gemäß zumindest einem der Ansprüche 1-10, umfassend die Schritte
• Transportieren einer Verpackung (G) in einen Erkennungsbereich (B) zur optischen Erkennung von Merkmalen der Verpackung (G)
• Bestrahlen der Verpackung (G) mit Licht durch mehrere Lichtquellen (L)
• Aufnahme eines von der Verpackung (G) reflektierten Lichts mittels zumindest einer Aufnahmeeinrichtung (K₁₁ K₁₂, K₂₁, K₂₂ )
• Abtransportieren der Verpackung (G) aus dem Erkennungsbereich (B)
wobei die Lichtquellen (L) derart zusammenwirken, dass die Lichtquellen (L) im Wesentlichen gleichzeitig die Verpackung (G) mit Licht bestrahlen.

12. Verfahren gemäß Anspruch 11, wobei
das aufgenommene Licht mittels einer Analysevorrichtung analysiert wird.

13. Verfahren gemäß Anspruch 11, wobei
die Aufnahmeeinrichtungen (K₁₁, K₁₂, K₂₁, K₂₂) derart zusammenwirken, sodass diese im Wesentlichen gleichzeitig das von der Verpackung (G) reflektierte Licht aufnehmen.

## Geänderte Patentansprüche

### Geänderte Patentansprüche gemäss Regel 137(2) EPÜ.

**1.** Vorrichtung (1) zur optischen Erkennung von Merkmalen auf Verpackungen (G), insbesondere Bar- oder Strichcodes oder dergleichen, umfassend
mehrere Lichtquellen (L) zur Bestrahlung einer Verpackung (G) mit Licht,
mehrere Aufnahmeeinrichtungen (K₁₁, K₁₂, K₂₁, K₂₂) zur Aufnahme des von der Verpackung (G) reflektieren Lichts,
einen Erkennungsbereich (B) zur optischen Erkennung von Merkmalen der Verpackung (G),
eine Zuführeinrichtung (T₁) zum Transportieren der Verpackung (G) in den Erkennungsbereich (B),
eine Abführeinrichtung (T₂)zum Entfernen der Verpackung (V) aus dem Erkennungsbereich (B),
wobei die Lichtquellen (L) und die Aufnahmeeinrichtungen (K₁₁, K₁₂, K₂₁, K₂₂) im Bereich des Erkennungsbereichs (B) angeordnet sind, und
wobei die Aufnahmeeinrichtungen (K₁₁, K₁₂, K₂₁, K₂₂) im Wesentlichen in zumindest zwei Ebenen (E₁, E₂) angeordnet sind, welche zueinander parallel und beabstandet angeordnet sind und wobei die beiden Ebenen (E₁, E₂) senkrecht zu einer Transportrichtung (R) der Verpackung (G) angeordnet sind, wobei die Aufnahmeeinrichtungen (K₁₁, K₁₂, K₂₁, K₂₂) und/oder die Lichtquellen (L) zumindest teilweise spiralförmig und/oder helixförmig entlang einer Richtung auf den jeweiligen zumindest zwei Ebenen (E₁, E₂) angeordnet sind.

**2.** Vorrichtung (1) nach Anspruch 1, wobei
die Lichtquellen (L) in zumindest zwei Ebenen (E_{L1}, E_{L2}) angeordnet sind, welche zueinander parallel und beabstandet angeordnet sind und wobei insbesondere die beiden Ebenen (E_{L1}, E_{L2}) senkrecht zu einer Transportrichtung (R) der Verpackung (G) angeordnet sind.

**3.** Vorrichtung (1) nach zumindest Anspruch 1, wobei die Aufnahmeeinrichtungen (K₁₁, K₁₂, K₂₁, K₂₂) und/oder die Lichtquellen (L) in den jeweiligen Ebenen (E₁, E₂) im Wesentlichen kreisförmig angeordnet sind.

**4.** Vorrichtung (1) nach zumindest Anspruch 3, wobei zumindest eine der Lichtquellen (L) in einem Bereich (Z) unterhalb des Erkennungsbereichs (B) senkrecht zu ihrer Ebene (E_{L1}, E_{L2}) angeordnet ist.

**5.** Vorrichtung nach zumindest Anspruch 1, wobei die Lichtquellen (L) außerhalb des Bereichs zwischen den beiden Ebenen (E₁, E₂) der Aufnahmeeinrichtungen (K₁₁, K₁₂, K₂₁, K₂₂) angeordnet sind.

**6.** Vorrichtung nach zumindest Anspruch 1, wobei die Aufnahmeeinrichtungen (K₁₁, K₁₂, K₂₁, K₂₂) und/oder die Lichtquellen (L) im Wesentlichen abwechselnd auf der ersten und zweiten Ebene (E₁, E₂) angeordnet sind, wobei insbesondere zwei aufeinanderfolgende Aufnahmeeinrichtungen (K₁₁, K₁₂, K₂₁, K₂₂) in einer Ebene (E₁, E₂) jeweils den gleichen Abstand zueinander aufweisen.

**7.** Vorrichtung nach zumindest Anspruch 3, wobei die Kreise (C₁, C₂), auf denen die Aufnahmeeinrichtungen (K₁₁, K₁₂, K₂₁, K₂₂) und/oder die Lichtquellen (L) angeordnet sind, im Wesentlichen gleichen Radius aufweisen.

**8.** Vorrichtung nach zumindest Anspruch 3, wobei die Mittelpunkte der zwei Kreise (C₁, C₂) auf einer gemeinsamen Achse angeordnet sind, wobei insbesondere die gemeinsame Achse und Transportrichtung (R) parallel zueinander sind.

**9.** Vorrichtung nach zumindest einem der Ansprüche 1-8, wobei eine Analysevorrichtung zur Analyse des aufgenommenen Lichts angeordnet ist.

**10.** Vorrichtung nach einem der vorhergehenden Ansprüche, wobei die Richtung die Transportrichtung (R) bezeichnet.

**11.** Verfahren zur optischen Erkennung von Merkmalen auf Verpackungen (G), insbesondere Bar- oder Strichcodes oder dergleichen, und insbesondere zum Ablauf auf einer Vorrichtung (1) gemäß zumindest einem der Ansprüche 1-10, umfassend die Schritte
• Transportieren einer Verpackung (G) in einen Erkennungsbereich (B) zur optischen Erkennung von Merkmalen der Verpackung (G)
• Bestrahlen der Verpackung (G) mit Licht durch mehrere Lichtquellen (L)
• Aufnahme eines von der Verpackung (G) reflektierten Lichts mittels zumindest einer Aufnahmeeinrichtung ₍K₁₁, K₁₂, K₂₁, K22)
• Abtransportieren der Verpackung (G) aus dem Erkennungsbereich (B)
• wobei die Lichtquellen (L) derart zusammenwirken, dass die Lichtquellen (L) im Wesentlichen gleichzeitig die Verpackung (G) mit Licht bestrahlen.

**12.** Verfahren gemäß Anspruch 11, wobei das aufgenommene Licht mittels einer Analysevorrichtung analysiert wird.

**13.** Verfahren gemäß Anspruch 11, wobei
die Aufnahmeeinrichtungen (K₁₁, K₁₂, K₂₁, K₂₂) derart zusammenwirken, sodass diese im Wesentlichen gleichzeitig das von der Verpackung (G) reflektierte Licht aufnehmen.
